# EUROPEAN PATENT SPECIFICATION

(11) **EP 4 420 507 B1**
(45) Date of publication and mention of the grant of the patent: **28.10.2026**
(21) Application number: 24155715.6
(22) Date of filing: 05.02.2024
(51) Int. Cl.: A01D 43/08, A01D 69/03, A01D 69/08, A01D 69/10, A01D 75/20, A01F 29/16

(54) **FORAGE HARVESTERS**
FELDHÄCKSLER
RÉCOLTEUSES-HACHEUSE

(30) Priority: 21.02.2023 GB 202302457
(43) Date of publication of application: 28.08.2024
(73) Proprietor: AGCO International GmbH, 8212 Neuhausen am Rheinfall (CH)
(72) Inventor: BROCKMANN, Andreas, 87616 Marktoberdorf (DE)
(74) Representative: AGCO Intellectual Property Department

(56) References cited:
- EP-A2- 2 145 527
- WO-A1-2012/099006
- US-A1- 2013 247 527

## Description

### FIELD

The present invention relates to an improved forage harvester, and, in particular, to a drive system for components of the forage harvester.

### BACKGROUND

In the absence of a suitable braking system, the large inertia and speed of rotation of a chopper drum within a forage harvester means it can often take 50 seconds or more for the chopper drum to cease rotation. This creates an undesirable danger and risk of injury to an operator of the forage harvester.

A number of solutions to this problem have been proposed.

In WO 2011/128286 (AGCO International GmbH) a system is disclosed in which the chopper drum is driven from a prime mover of the forage harvester via a drive train, said braking system comprising a clutch operable between an engaged condition connecting the chopper drum to the prime mover and a disengaged position in which the chopper drum is disconnected from the prime mover. The hydraulic circuit includes a first pump connected with the chopper drum which pumps fluid around the hydraulic circuit, and a second pump connected with feed rolls of the forage harvester which feed crop to the chopper drum as well as a pilot-operated diverter valve/chopper drum brake valve. Both the first pump and the second pump require individual charge pumps to charge the first and second pumps. This adds complexity and cost to the hydraulic circuit.

Advantages of the present invention will be apparent from the description below.

### BRIEF SUMMARY

According to a first aspect of the present invention, in a forage harvester comprising a drive system, a prime mover, a chopper drum driven from the prime mover via a drive train, and feed rolls, the drive system comprises a clutch operable between an engaged condition connecting the chopper drum to the prime mover and a disengaged position in which the chopper drum is disconnected from the prime mover, a first hydraulic variable displacement pump connected with the chopper drum which pumps fluid around a first hydraulic circuit connected to a first motor, a second hydraulic variable displacement pump which pumps fluid around a second hydraulic circuit to a feed roll motor connected with the feed rolls of the forage harvester, characterised in that the drive system further comprises a single charge pump hydraulically connected to both the first hydraulic variable displacement pump and the second hydraulic variable displacement pump.

Preferably, when the clutch is operated to adopt the disengaged position and isolate the chopper drum from the prime mover, the drive system is operated to brake the chopper drum by operating a pilot-operated blocking valve in the first hydraulic circuit to disconnect fluid flow between the first pump and the first motor and divert flow through a high pressure relief valve located internally of the first hydraulic variable displacement pump.

More preferably, the drive system further comprises an electronic controller operable to control operation of the clutch between the engaged and disengaged positions and to control operation of the pilot-operated blocking valve.

Preferably, the feed roll motor is a continuously operated variable displacement motor.

Preferably, the drive system further comprises a foreign object sensor and quick stop valve.

Preferably, the drive system further comprises a set of lower roller gears operable by a supply of fluid from the second hydraulic variable displacement pump to the feed roll motor to drive a first lower set of feed rolls by a gear chain.

Preferably, the drive system further comprises a set of upper roller gears operable by a supply of fluid from the second hydraulic variable displacement pump to the feed roll motor to drive a second upper set of feed rolls by a gear chain and a cardan shaft.

Preferably, the drive system further comprises a chopper drum brake valve comprising a main piston part and a directional control valve.

### BRIEF DESCRIPTION OF THE DRAWINGS

The invention will now be described, by way of example only, with reference to the accompanying drawings, in which:
FIG 1 shows a schematic side view of a forage harvester;
FIG 2 shows diagrammatically the electronic and hydraulic elements of a braking system for a forage harvester in accordance with the present invention; and
FIG 3 shows diagrammatically a hydraulic supply circuit for use in the present invention.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description and is defined by the appended claims.

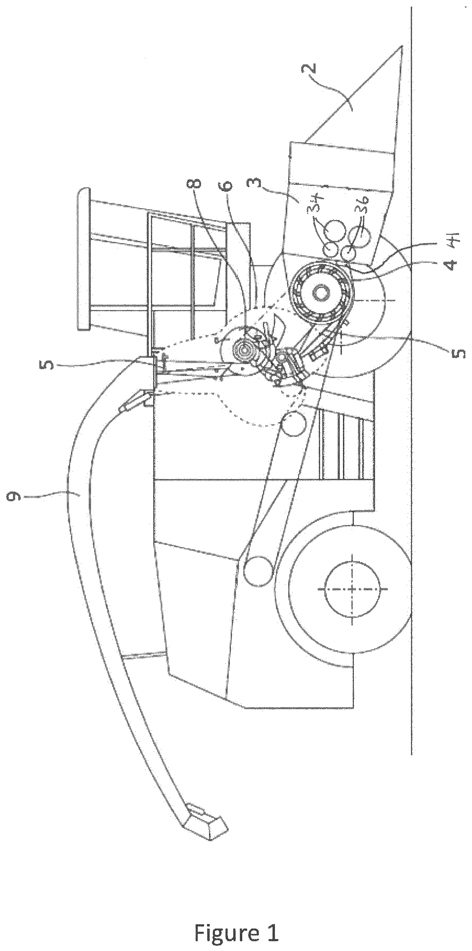

Figure 1 shows a forage harvester provided with a front attachment 2 such as a header which contains cutting equipment for cutting and harvesting a crop. The cut crop is fed from the header via associated feed rollers 34,36 in a housing 3 to a chopper drum 4 where the crop is chopped into smaller pieces between the chopper drum 4 and an associated shear bar 41. The chopped crop passes through a duct 5 and is optionally directed into a cracker unit 6 where the crop is further crushed and threshed. The harvested crop is then blown upwards along the duct 5 by an accelerator 8 and exits through a spout 9 directing the processed crop into a trailer or other vehicle moving alongside the forage harvester.

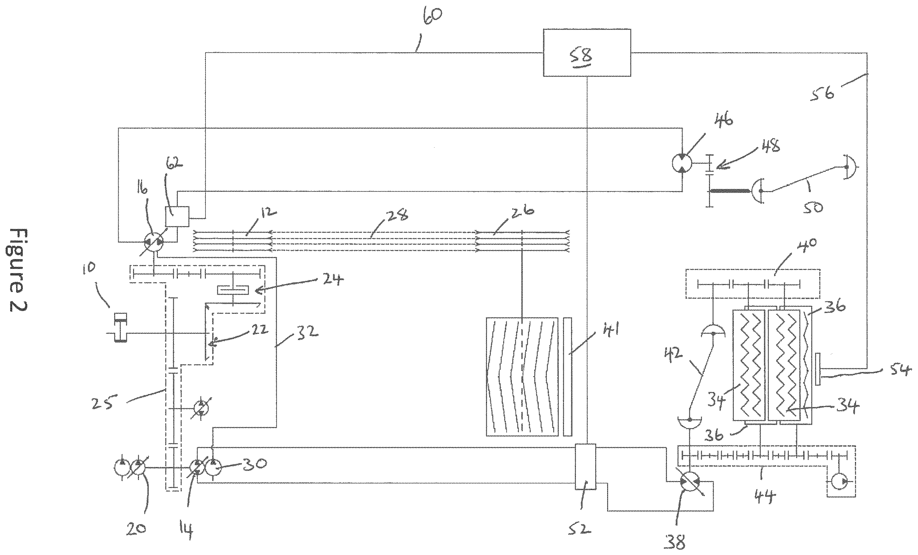

Figure 2 shows in diagrammatic form the electronic and hydraulic elements of a drive system for elements of a forage harvester in accordance with the present invention.

A prime mover 10 such as an internal combustion engine of the forage harvester is provided to drive various mechanical outputs, such as a first pulley 12, and hydraulic pumps 14, 16, 20, 30 by way of a transmission including an output gear 22 and a disengageable clutch 24 provided within a housing 25. Some of the outputs of the clutch 24 can be switched on or off during operation of the prime mover. In the illustrated embodiment, a first hydraulic pump 16 and first pulley 12 are switched via the clutch 24, while other of the hydraulic pumps 14, 20, 30 are driven continuously.

The chopper drum 4 is driven by a second pulley 26 fixed rotationally to the chopper drum 4. A drive belt 28 between the first pulley 12 and the second pulley 26 enables the chopper drum 4 to be driven by the prime mover while the clutch 24 is engaged.

As will be understood, the chopper drum 4 has a large mass which together with the speed of rotation leads to a long run out of the chopper drum when the clutch 24 is disengaged, that is, in the absence of braking of the chopper drum it takes an undesirably long time for the chopper drum to come to rest. Typical run down times for an unbraked chopper drum are around 50 seconds. During this time, the rotating chopper drum presents a potential danger, for example, to an operator seeking to clear a blockage.

A second hydraulic pump 14 is a swash plate variable displacement pump for closed circuits. Pump 14 is in communication with internal charge pump 30.

First hydraulic pump 16 is a swash plate variable displacement pump for closed circuits without an additional charge pump. Charge pump 30 supplies both the first hydraulic pump 16 and the second variable displacement pump 14 with charge pressure. First hydraulic pump 16 is fed by a line 32 extending from charge pump 30 to the first hydraulic pump 16. In comparison to the disclosed circuit of WO 2011/128286, the use of a single charge pump makes the use of a separate charge pump for the first hydraulic pump 16 superfluous, as is the need for the associated additional valve arrangements of such a construction.

Lower and upper sets of feed rollers 34,36 are also driven by the hydraulic system. Variable displacement pump 14 conveys an oil flow, the quantity of which can be adjusted, to a bent axis displacement motor 38 which drives a lower roller gear set 44. A set of two lower feed rollers 36 are driven via a gear chain in the lower roller gear set 44.

A cardan shaft 42 drives an upper roller gear set 40 which drives a set of two upper feed rollers 34 via a gear chain.

The speed of the hydraulic motor 38 and the resulting speed of the upper and lower feed rollers 34,36 can be adjusted over a wide range by the combination of the second variable displacement pump 14 and the variable displacement motor 38. Such a good range of adjustability advantageously results in a large range of cutting length without the need for additional cutting length gear. Since the second variable displacement pump 14 is driven continuously, this enables the reversal of the direction of rotation of the feed rollers 34,36, even where the chopper drum 4 is clogged and so blocked from rotation.

The first variable displacement pump 16 promotes an oil flow, the amount of which can be adjusted, to a bent axis constant motor 46 which is also used to drive a header gear 48 in turn driving the header via a cardan shaft 50. Since a relatively small speed spread of 1:3 is needed for the harvesting attachment 2, the hydraulic motor 46 can be designed as a constant motor.

Both circuits (between pump 16 and motor 46 and between pump 14 and variable displacement motor 38) can change the direction of rotation of the associated oil motors 38,46 by reversing the direction of the oil flow in the pumps 14,16 thus enabling the feed rollers 34,36 and the header to be reversed, for example to allow removal of blockages.

A quick stop valve 52 is provided in the feed roller circuit. If a ferromagnetic body is drawn into the feed rollers, this is detected by a sensor 54. A reporting signal is sent to an electronic control unit 58, for example via a signal line 56. While a signal line 56 is illustrated it will be understood that this signal line (and the others referred to in this description) may take any suitable form and include a wireless communication route. On receipt of such a reporting signal the electronic control unit 58 issues a signal to actuate the quick stop valve 52, for example via a signal line 59. As a result of actuation of the quick stop valve 52 the feed motor 38 is stopped immediately and the associated stopping of the feed rollers 34,36 prevents the foreign body from reaching the chopper drum 4 and causing damage there. Such quick stop valves are known in the art (for example as disclosed in EP2557911) and will not be described further.

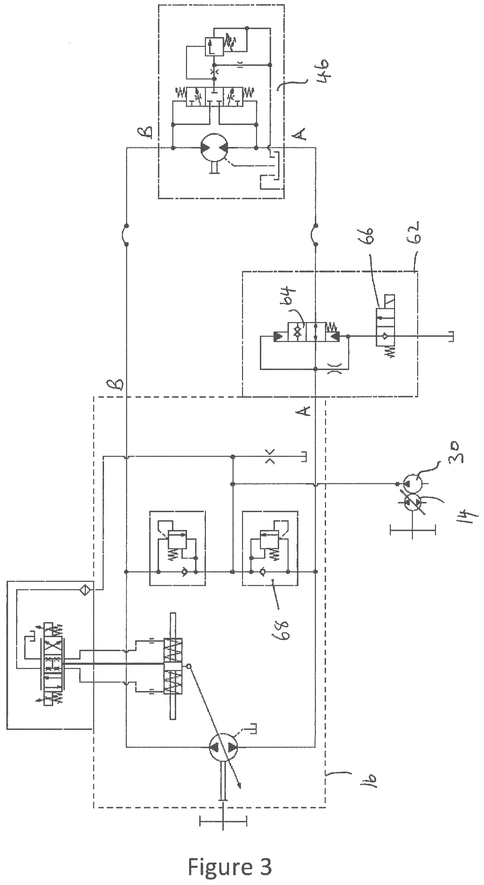

A chopper drum brake valve 62 is arranged in the header circuit. Further details of the chopper drum brake valve 62 may be seen in FIG 3. In normal working operation, the oil flow of the first variable displacement pump 16 flows from port A (FIG 3) via brake valve 62 to port A of the hydraulic motor 46 and so drives the hydraulic motor 46. The oil then flows along a return line from port B of the motor 46 to port B of the first variable displacement pump 16.

Chopper drum brake valve 62 comprises a pilot-operated blocking valve 64 and a directional control valve 66. The pilot-operated blocking valve 64 is in an open position in both forward and reverse operation of the motor 46. The directional control valve 66 is a seat tight directional control valve, which is closed when in the denergised spring condition and open when energised. It can be seen that this construction of the chopper drum brake valve 62 omits the relief valve required in the construction of the chopper brake control circuit disclosed in WO 2011/128286, resulting in a simpler, less expensive design. Further, since the chopper drum brake valve 62 is only connected to the one port of the motor 46, this arrangement is simpler and more cost effective to instal in the forage harvester than the arrangement disclosed in WO 2011/128286.

If an operator wishes to interrupt operation of the chopper drum 4, an instructing signal is provided to the electronic control unit 58 causing the electronic control unit 58 to send a suitable signal to cause the clutch 24 to be disengaged. Conveniently the forage harvester is provided with a user input terminal within a cab of the forage harvester for the operator to use to cause such an instructing signal to be provided to the electronic control unit 58.

On receipt of such an instructing signal, the electronic control unit 58 sends a suitable signal, for example via a signal line, to the directional control valve 66 to energise the directional control valve 66. When the directional control valve 66 is energised, the balance of forces on the ends of the piston causes the main piston part to move from the open position to a closed position.

Once energised, the oil flow of the variable displacement pump 16 can no longer escape from port A and instead flows out through an internal high pressure relief valve 68 of the first variable displacement pump 16. The volumetric flow that flows via the high pressure relief valve 68 can be adjusted by adjusting the swivel angle of the first variable displacement pump 16. In this operating situation, a high drive torque occurs on the pump shaft, which is transmitted from the pump shaft via the gear chain to the first pulley 12, the drive belt 28 and so to the chopper drum 4. In this way, the drive torque of the first variable displacement pump 16 acts as a brake for the chopper drum 4 and reduces the run out time of the chopper drum to around 6 or 7 seconds.

The swash angle of the first variable displacement pump 16 can be set to a given design of chopper drum. For example, as will be understood, chopper drums 4 include a number of chopping blades designed to interact with a shear bar to chop the harvested crop fed through the harvester. It is known to produce chopper drums having 20, 28 or 38 chopper blades about the circumference of the chopper drum. The weight and inertia of these different designs of chopper drum will differ from one another. The swash angle of first variable displacement pump 16 may be adjusted to ensure that the runout time of the chopper drum, whatever the design, is kept to around 6 or 7 seconds.

From reading the present disclosure, other modifications will be apparent to persons skilled in the art. Such modifications may involve other features which are already known in the field of forage harvesters and component parts therefore and which may be used instead of or in addition to features already described herein.

## Claims

1. A forage harvester comprising a drive system, a prime mover (10), a chopper drum (4) driven from the prime mover (10) via a drive train, and feed rolls (34,36), wherein the drive system comprises a clutch (24) operable between an engaged condition connecting the chopper drum (4) to the prime mover (10) and a disengaged position in which the chopper drum (4) is disconnected from the prime mover, a first hydraulic variable displacement pump (16) connected with the chopper drum (4) which pumps fluid around a first hydraulic circuit connected to a first motor (46), a second hydraulic variable displacement pump (14) which pumps fluid around a second hydraulic circuit to a feed roll motor (38) connected with the feed rolls (34,36) of the forage harvester, wherein the drive system further comprises a single charge pump (30),
**characterised in that**
the single charge pump (30) is hydraulically connected to both the first hydraulic variable displacement pump (16) and the second hydraulic variable displacement pump (14).

2. A forage harvester according to claim 1, **characterised in that** when the clutch (24) is operated to adopt the disengaged position and isolate the chopper drum from the prime mover, the drive system is operated to brake the chopper drum (4) by operating a pilot-operated blocking valve (64) in the first hydraulic circuit to disconnect fluid flow between the first pump (16) and the first motor (46) and divert flow through a high pressure relief valve (68) located internally of the first hydraulic variable displacement pump (16).

3. A forage harvester according to claim 2, wherein the drive system further comprises an electronic controller (58) operable to control operation of the clutch (24) between the engaged and disengaged positions and to control operation of the pilot-operated blocking valve (64).

4. A forage harvester according to any of claim 1 to claim 3, **characterised in that** the feed roll motor (38) is a continuously operated variable displacement motor.

5. A forage harvester according to any of claim 1 to claim 4, wherein the drive system further comprises a foreign object sensor (54) and quick stop valve (52).

6. A forage harvester according to any of claim 1 to claim 5, wherein the drive system further comprises a set of lower roller gears (44) operable by a supply of fluid from the second hydraulic variable displacement pump (14) to the feed roll motor (38) to drive a first lower set of feed rolls (36) by a gear chain.

7. A forage harvester according to any of claim 1 to claim 6, wherein the drive system further comprises a set of upper roller gears (40) operable by a supply of fluid from the second hydraulic variable displacement pump (14) to the feed roll motor (38) to drive a second upper set of feed rolls (34) by a gear chain and a cardan shaft (42).

8. A forage harvester according to claim 2, wherein the drive system further comprises a chopper drum brake valve (62) comprising a main piston part and a directional control valve (66).

## Patentansprüche

1. Feldhäcksler, umfassend ein Antriebssystem, eine Antriebsmaschine (10), eine Häckseltrommel (4), die von der Antriebsmaschine (10) über einen Antriebsstrang angetrieben wird, und Zuführwalzen (34, 36), wobei das Antriebssystem eine Kupplung (24) umfasst, die zwischen einem eingekuppelten Zustand, der die Häckseltrommel (4) mit der Antriebsmaschine (10) verbindet, und einer ausgekuppelten Position, in der die Häckseltrommel (4) von der Antriebsmaschine getrennt ist, betätigbar ist, eine erste hydraulische Verstellpumpe (16), die mit der Häckseltrommel (4) verbunden ist, die Fluid um einen ersten Hydraulikkreis pumpt, der mit einem ersten Motor (46) verbunden ist, eine zweite hydraulische Verstellpumpe (14), die Fluid um einen zweiten Hydraulikkreis zu einem Zuführwalzenmotor (38) pumpt, der mit den Zuführwalzen (34, 36) des Feldhäckslers verbunden ist, wobei das Antriebssystem ferner eine Einfachladepumpe (30) umfasst, **dadurch gekennzeichnet, dass** die Einfachladepumpe (30) sowohl mit der ersten hydraulischen Verstellpumpe (16) als auch mit der zweiten hydraulischen Verstellpumpe (14) hydraulisch verbunden ist.

2. Feldhäcksler nach Anspruch 1, **dadurch gekennzeichnet, dass** bei Betätigung der Kupplung (24), die ausgerückte Stellung einzunehmen und die Häckseltrommel von der Antriebsmaschine zu trennen, das Antriebssystem betätigt wird, die Häckseltrommel (4) zu bremsen, indem ein vorgesteuertes Sperrventil (64) im ersten Hydraulikkreis betätigt wird, den Fluidstrom zwischen der ersten Pumpe (16) und dem ersten Motor (46) zu trennen und den Strom durch ein Hochdruckbegrenzungsventil (68) umzuleiten, das sich innerhalb der ersten hydraulischen Verstellpumpe (16) befindet.

3. Feldhäcksler nach Anspruch 2, wobei das Antriebssystem ferner eine elektronische Steuerung (58) umfasst, die dazu funktionsfähig ist, den Betrieb der Kupplung (24) zwischen der eingerückten und der ausgerückten Position zu steuern und den Betrieb des vorgesteuerten Sperrventils (64) zu steuern.

4. Feldhäcksler nach einem der Ansprüche 1 bis 3, **dadurch gekennzeichnet, dass** der Zuführwalzenmotor (38) ein dauerbetriebener Verstellmotor ist.

5. Feldhäcksler nach einem der Ansprüche 1 bis 4, wobei das Antriebssystem ferner einen Fremdkörpersensor (54) und ein Schnellschlussventil (52) umfasst.

6. Feldhäcksler nach einem der Ansprüche 1 bis 5, wobei das Antriebssystem ferner einen Satz untere Walzenzahnräder (44) umfasst, die durch eine Fluidzufuhr von der zweiten hydraulischen Verstellpumpe (14) zum Zuführwalzenmotor (38) dazu funktionsfähig sind, einen ersten, unteren Satz Zuführwalzen (36) durch eine Zahnradkette anzutreiben.

7. Feldhäcksler nach einem der Ansprüche 1 bis 6, wobei das Antriebssystem ferner einen Satz obere Walzenzahnräder (40) umfasst, die durch eine Fluidzufuhr von der zweiten hydraulischen Verstellpumpe (14) zum Zuführwalzenmotor (38) dazu funktionsfähig sind, einen zweiten, oberen Satz Zuführwalzen (34) durch eine Zahnradkette und eine Kardanwelle (42) anzutreiben.

8. Feldhäcksler nach Anspruch 2, wobei das Antriebssystem ferner ein Häckseltrommelbremsventil (62) umfasst, das einen Hauptkolbenteil und ein Wegeventil (66) umfasst.

## Revendications

1. Récolteuse-hacheuse comprenant un système d'entraînement, un moteur principal (10), un tambour hacheur (4) entraîné depuis le moteur principal (10) par l'intermédiaire d'une chaîne cinématique, et des rouleaux d'alimentation (34, 36), le système d'entraînement comprenant un embrayage (24) pouvant fonctionner entre un état en prise reliant le tambour hacheur (4) au moteur principal (10) et une position non en prise dans laquelle le tambour hacheur (4) n'est pas relié au moteur principal, une première pompe hydraulique à cylindrée variable (16) reliée au tambour hacheur (4) qui pompe du fluide autour d'un premier circuit hydraulique relié à un premier moteur (46), une seconde pompe hydraulique à cylindrée variable (14) qui pompe du fluide autour d'un second circuit hydraulique vers un moteur de rouleau d'alimentation (38) relié aux rouleaux d'alimentation (34, 36) de la récolteuse-hacheuse, le système d'entraînement comprenant en outre une pompe de charge unique (30), **caractérisée en ce que** la pompe de charge unique (30) est reliée hydrauliquement à la fois à la première pompe à cylindrée variable hydraulique (16) et à la seconde pompe à cylindrée variable hydraulique (14).

2. Récolteuse-hacheuse selon la revendication 1, **caractérisée en ce que** lorsque l'embrayage (24) est actionné pour adopter la position non en prise et isoler le tambour hacheur du moteur principal, le système d'entraînement est actionné pour freiner le tambour hacheur (4) en actionnant une vanne de sectionnement pilotée (64) dans le premier circuit hydraulique afin de déconnecter l'écoulement de fluide entre la première pompe (16) et le premier moteur (46) et de dévier l'écoulement à travers une soupape de décharge haute pression (68) située à l'intérieur de la première pompe hydraulique à cylindrée variable (16).

3. Récolteuse-hacheuse selon la revendication 2, le système d'entraînement comprenant en outre un dispositif de commande électronique (58) pouvant fonctionner pour commander le fonctionnement de l'embrayage (24) entre les positions en prise et non en prise et pour commander le fonctionnement de la vanne de sectionnement pilotée (64).

4. Récolteuse-hacheuse selon l'une quelconque des revendications 1 à 3, **caractérisée en ce que** le moteur de rouleau d'alimentation (38) est un moteur à cylindrée variable fonctionnant en continu.

5. Récolteuse-hacheuse selon l'une quelconque des revendications 1 à 4, le système d'entraînement comprenant en outre un capteur d'objet étranger (54) et une vanne d'arrêt rapide (52).

6. Récolteuse-hacheuse selon l'une quelconque des revendications 1 à 5, le système d'entraînement comprenant en outre un ensemble d'engrenages à rouleaux inférieurs (44) actionnables par une alimentation en fluide de la seconde pompe hydraulique à cylindrée variable (14) vers le moteur de rouleau d'alimentation (38) pour entraîner un premier ensemble inférieur de rouleaux d'alimentation (36) par une chaîne d'engrenages.

7. Récolteuse-hacheuse selon l'une quelconque des revendications 1 à 6, le système d'entraînement comprenant en outre un ensemble d'engrenages à rouleaux supérieurs (40) actionnables par une alimentation en fluide de la seconde pompe hydraulique à cylindrée variable (14) vers le moteur de rouleau d'alimentation (38) pour entraîner un second ensemble supérieur de rouleaux d'alimentation (34) par une chaîne d'engrenages et un arbre à cardan (42).

8. Récolteuse-hacheuse selon la revendication 2, le système d'entraînement comprenant en outre un clapet de frein de tambour hacheur (62) comprenant une partie piston principal et un distributeur (66).
